# EUROPEAN PATENT APPLICATION

(11) **EP 0 879 744 A2**
(43) Date of publication of application: **25.11.1998**
(21) Application number: 98108417.1
(22) Date of filing: 08.05.1998
(51) Int. Cl.: B60S 3/00

(54) **Automatic washing apparatus for vehicles**

(30) Priority: 22.05.1997 IT MI971197
(71) Applicant: CECCATO S.p.A., I-36041 Montecchio Maggiore (Vicenza) (IT)
(72) Inventor: Pillon, Pierangelo, 36040 Brendola (Vicenza) (IT)
(74) Representative: Rapisardi, Mariacristina

(57) **Abstract**

The automatic washing apparatus for vehicles includes a cleaning means (2) for cleaning a vehicle (3) and a drying means (4) for drying the vehicle, the drying means comprises a drying device having at least one fan (5) associated with at least one air delivering nozzle (6), comprising an air flow directing means adapted to selectively direct said air flow to at least a first area and a second area of said nozzle.

## Description

The present invention relates to an automatic washing apparatus for vehicles.

In conventional automatic washing apparatus for vehicles, after a washing operation by means of brushes or other dirt removing means, drying systems provide for the drying of the vehicle.

Generally, the drying operation is performed by fixed fans adapted to blow air on the vehicle from a distance in order to easily dry vehicles of different shapes.

According to a different approach, the drying system is provided with a follower nozzle adapted to follow the shape of the vehicle thereby providing a better drying, owing to the proximity to the body work, with a lower electrical energy consumption.

The conventional horizontal nozzles however cannot dry the sides of the vehicle effectively because the sides of the vehicle are at a greater distance from the nozzles with respect of the upper part of the vehicle.

To obviate this drawback, the conventional washing apparatus are provided with either mobile or fixed fans arranged so as to dry the sides of the vehicle leaving the horizontal nozzle to dry the upper part of the vehicle.

Such arrangement entails the use of at least four electrical fans, two for operating the horizontal nozzle and two side fans, and accordingly a considerable production cost as well as a considerable power requirement.

Furthermore, the operation of at least four fans during the use of the apparatus entails a considerable power consumption and noise which can be very annoying to the personnel that is possibly manually drying the vehicle for refining.

An aim of the present invention is to obviate the drawbacks of the cited prior art.

An object of the invention is to provide an automatic washing apparatus, for vehicles, having a simplified structure, being capable of using only two fans for drying the vehicle instead of the usual four fans of the conventional apparatus.

A further object of the invention is to provide an automatic washing apparatus for vehicles having a lower power and having a lower energy consumption with respect of the conventional automatic washing apparatus.

Still a further aim of the invention is to provide an automatic washing apparatus for vehicles, having a lower production cost.

Still a further aim of the invention is to provide an automatic washing apparatus for vehicles, having a reduced noise thereby improving the working environment with respect to conventional washing apparatus.

The above aims and other aims that will be more apparent hereinafter, are achieved by an automatic washing apparatus for vehicles comprising a cleaning means for cleaning a vehicle and a drying means for drying the vehicle, characterized in that said drying means comprises a drying device having at least one fan associated with at least one air delivering nozzle, comprising an air flow directing means adapted to selectively direct said air flow to at least a first area and a second area of said nozzle.

Further characteristics and advantages of the invention will be more apparent by the following description of an embodiment of the invention, illustrated, by way of example in the enclosed drawings wherein:

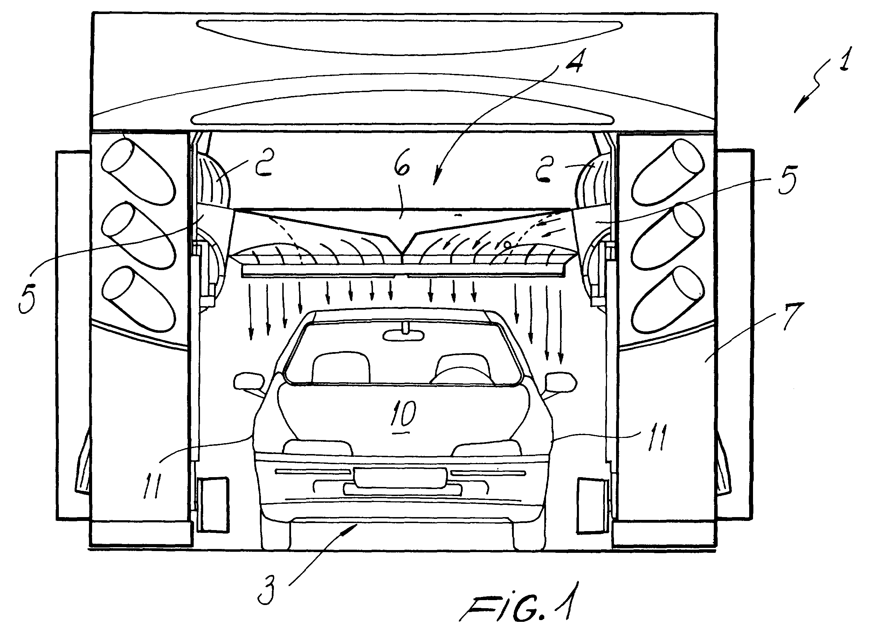

FIG. 1 is a schematic front view of the apparatus according to the present invention; and

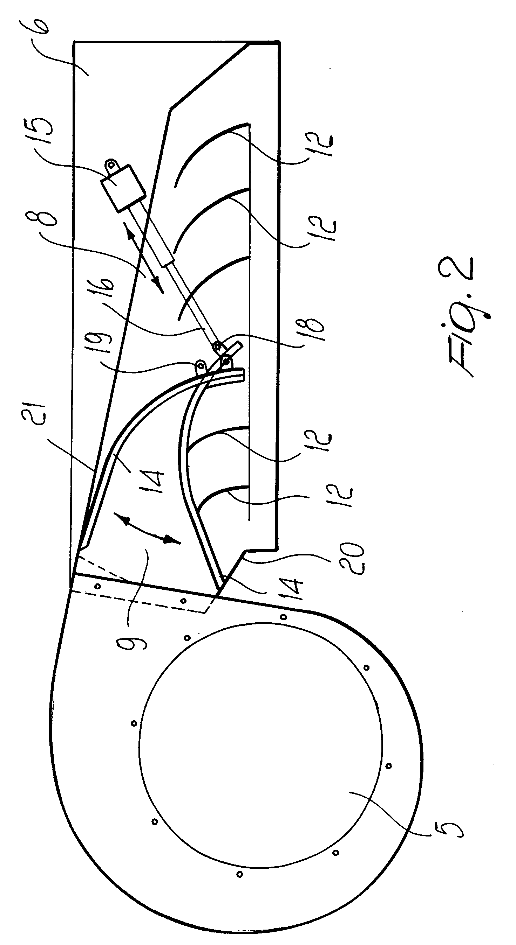

FIG. 2 is a partially sectioned front view of the nozzle according to the invention for drying the upper part and sides of the vehicle.

With reference to the drawings, the automatic washing apparatus for vehicles, according to the present invention, generally designated by the reference numeral 1, comprises a cleaning means such as for example brushes 2 for cleaning the body work of the vehicle 3 and a drying means, generally designated by the reference numeral 4, for drying the body work of the vehicle.

In particular, the drying means comprises a drying device having two electrical fans 5 associated with a nozzle 6 adapted to deliver air. The nozzle is of the follower type, i.e. adapted to follow the shape of the vehicle as much as possible.

The drying device is mounted on a mobile frame 7 adapted to move along the vehicle 3.

In particular, nozzle 6 comprises an air flow directing means adapted to direct the air flow to at least a first area 8 and to a second area 9 of the nozzle 6.

More particularly, first area 8 is substantially arranged in the central portion of the nozzle and is adapted to dry the upper portion 10 of vehicle 3, while the second area 9 is arranged on both sides of the nozzle and is adapted to fry the sides 11 of vehicle 3.

More in detail, the directing means of nozzle 6 comprises a plurality of fixed flaps 12 adapted to homogeneously distribute air outside and a plurality of mobile flaps adapted to direct the air selectively to the first area 8 or the second area 9 of the nozzle.

The mobile flaps comprise at least two deflector members 14 rotatably associated at the sides of the nozzle and adapted to move, by means of operating members, such as for example a fluid operated piston 15, from at least a first position to at least a second position for directing air to the first o second areas 8,9 of nozzle 6.

The fluid operated piston 15 is inside the nozzle 6 and has a stem 16 having a hinge 18 on each deflector member at its hinge 19 on nozzle 6.

As illustrated in the figures, each deflector member 14 is, in its first position, engaged to a lower wall 20 of the nozzle and, in its second position, to an upper wall 21 of the nozzle.

Conveniently, each deflector member 14 is curved and is arranged in an area of the nozzle comprised between the first area 8 and the second area 9 in order to obtain an air pressure, provided by the electrical fan 5, which is lower in the first area 8 and higher in the second area 9 thus allowing the air to easily reach and effectively dry the sides 11 of vehicle 3.

According to a preferred embodiment of the invention, the operating members, i.e. the fluid operated pistons 15, are activated to move the deflector means 14 in the first position, during the on going run of frame 7 along the vehicle, and to move the deflector means 14 in the second position during the return run of the frame.

In this manner the roof of the vehicle and then the sides of the vehicle are dried but this sequence can obviously be inverted as desired.

The operation of the apparatus according to the invention is apparent from the above description.

It has been seen in practice that the apparatus according to the invention is particularly advantageous for effectively drying the sides of the vehicle by using an horizontal nozzle of the follower type wherein the air under pressure is generated by only two electrical fans associated with the nozzle.

Accordingly, the apparatus requires less power, with only two fans instead of the four fans of conventional apparatus, and therefore has lower production costs and reduced energy consumption, as well as a reduced noise during the operation.

The apparatus according to the invention may have numerous modifications and variations, all within the inventive concept; furthermore, all the details may be substituted with technically equivalent elements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Automatic washing apparatus for vehicles comprising a cleaning means (2) for cleaning a vehicle (3) and a drying means (4) for drying the vehicle, characterized in that said drying means comprises a drying device having at least one fan (5) associated with at least one air delivering nozzle (6), comprising an air flow directing means (12,14) adapted to selectively direct said air flow to at least a first area (8) and a second area (9) of said nozzle (6).

2. Apparatus, according to claim 1, characterized in that said first area (8) is substantially located centrally in said nozzle (6) for drying the upper part (10) of the vehicle, and said second area (9) is located laterally in said nozzle for drying the sides (11) of the vehicle.

3. Apparatus, according to claim 1 or 2, characterized in that it comprises a first fan (5) and a second fan (5) associated with said nozzle arranged horizontally on a mobile frame (7).

4. Apparatus, according to one or more of the preceding claims, characterized in that said directing means comprises a plurality of fixed flaps (12) adapted to homogeneously distribute air to the outside of said nozzle, and a plurality of mobile flaps (14) adapted to selectively direct air to said first area and said second area of said nozzle.

5. Apparatus, according to one or more of the preceding claims, characterized in that said mobile flaps comprise at least two deflector means (14) each rotatably associated with said nozzle and adapted to move, by means of operating members (15), from at least a first position to at least a second position for directing air to said first area or second area of said nozzle.

6. Apparatus, according to one or more of the preceding claims, characterized in that said operating means is arranged inside said nozzle and comprises a fluid operated piston (15) having a stem (16) hinged to each of said deflector means at its pivoting point (19) inside said nozzle.

7. Apparatus, according to one or more of the preceding claims, characterized in that each deflector means in said first position engages a lower wall (20) of said nozzle and in said second position engages an upper wall (21) of said nozzle.

8. Apparatus, according to one or more of the preceding claims, characterized in that each deflector means (14) is curved and arranged in a portion of said nozzle comprised between said first area (8) and said second area (9) in order to provide an air pressure lower in said first area and higher in said second area in order to effectively reach the sides of the vehicle.

9. Apparatus, according to one or more of the preceding claims, characterized in that said operating means (15) move each deflector means (14) to said first position during the on going run of said frame along said vehicle and to said second position during the return run of said frame.
